(19) Europäisches Patentamt / European Patent Office / Office européen des brevets

(11) **EP 2 648 379 B1**

(12) **EUROPEAN PATENT SPECIFICATION**

(45) Date of publication and mention
of the grant of the patent:
**29.10.2014 Bulletin 2014/44**

(51) Int Cl.:
***H04L 25/02*** (2006.01)     ***G01S 13/90*** (2006.01)

(21) Application number: **13179481.0**

(22) Date of filing: **06.08.2013**

(54) **Method and apparatus for channel delay and phase error estimation**

Verfahren und Vorrichtung zur Schätzung von Verzögerungs- und Phasenfehlern eines Übertragungskanals

Procédé et dispositif d'estimation des erreurs de retardement et de phase d'un canal de transmission

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2012 CN 201210295991**

(43) Date of publication of application:
**09.10.2013 Bulletin 2013/41**

(73) Proprietor: **Institute of Electronics, Chinese
Academy of
Sciences
Beijing (CN)**

(72) Inventors:
• **Deng, Yun-kai
  100190 Beijing (CN)**
• **Gao, Can-guan
  100190 Beijing (CN)**
• **Zhao, Feng-jun
  100190 Beijing (CN)**
• **Wang, Yu
  100190 Beijing (CN)**
• **Feng, Jin
  100190 Beijing (CN)**
• **Zhang, Zhi-min
  100190 Beijing (CN)**
• **He, Xiao-yan
  100190 Beijing (CN)**
• **Zheng, Ming-jie
  100190 Beijing (CN)**
• **Li, Hong-yu
  100190 Beijing (CN)**
• **Ni, Jiang
  100190 Beijing (CN)**
• **Jia, Xiao-xue
  Haidian District Beijing 100190 (CN)**

(74) Representative: **Gulde & Partner
Patent- und Rechtsanwaltskanzlei mbB
Wallstraße 58/59
10179 Berlin (DE)**

(56) References cited:
**GB-A- 2 247 373**

• **CHIALIN WU ET AL: "Modeling and a Correlation
Algorithm for Spaceborne SAR Signals", IEEE
TRANSACTIONS ON AEROSPACE AND
ELECTRONIC SYSTEMS, vol. AES-10, no. 5, 1
September 1982 (1982-09-01), pages 563-575,
XP011166969, NJ, US ISSN: 0018-9251**

**Description**

**TECHNICAL FIELD**

The present disclosure relates to the field of error determination, and in particular to a method and an apparatus for estimating a channel error.

**BACKGROUND**

The multi-channel technology has important applications in Synthetic Aperture Radar (SAR) multi-beam imaging, interference imaging, moving target detection and the like, and channel consistency compensation (mainly channel delay and phase error) is one of the key points of the technology. Therefore, the estimations for channel delay and phase error are very important.

At present, the methods for estimating channel delay and phase error mainly includes: an internal calibration method and a method based on raw data. The method based on raw data mainly includes: a space time adaptive filtering method, a subspace projection method and the like. Generally, the internal calibration method is high in precision of estimating the delay and phase error, but requires a large number of devices and cannot compensate channel unbalance caused by an antenna nor track the change of a system. The method based on raw data does not need to increase the number of devices and can compensate channel unbalance caused by the antenna and track the change of the system. However, the conventional algorithm is complex and poor in stability. A method for estimating phase errors is disclosed in patent application GB 2247373.

Therefore, how to estimate the channel delay and phase error precisely and stably without increasing the number of the devices is an urgent problem to be solved now.

**SUMMARY**

Therefore, the present disclosure provides a method and an apparatus for estimating a channel error, to estimate a channel delay and a phase error stably and precisely according to claim 1 and claim 8, respectively.

Further details of said method are provided in dependent claims 2-7. Dependent claims 9 and 10 provide further details of said apparatus.

In the present disclosure, when two antennas are arranged along azimuth, the phase of the cross-correlation function in the range frequency domain and azimuth time domain is determined by both the channel error and the Doppler centre with respect to the range frequency domain. The phase of the cross-correlation function changes approximately linearly with respect to the range frequency domain, with the change slope determined by the channel delay; and after the linear change is removed, the phase error is determined by both the Doppler centre and the channel phase error, while the Doppler centre can be obtained by estimating system parameters or single channel data. Therefore, in the present disclosure, the range FFT is performed on the data of two channels at first to obtain the cross-correlation function of the transformed data along azimuth; the phase of the azimuth cross-correlation function is extracted and the range frequency is differentiated to obtain the linear change rate of the phase of the azimuth cross-correlation function along the range frequency, that is, the delay error between respective channels; and the delay compensation between the respective channels is performed according to the obtained delay error, i.e. the phase errors between respective channels can be estimated. By using the technical solution for estimating and compensating the channel error according to the present disclosure, the channel error can be estimated precisely and stably, so that the imaging quality in applications such as SAR multi-beam imaging, interference imaging and moving target detection can be improved.

**BRIEF DESCRIPTION OF THE DRAWINGS**

Fig. 1 is a flowchart of a method for estimating a channel error according to the present disclosure;

Fig. 2 is a flowchart of a method for estimating a channel error according to the present disclosure;

Fig. 3 shows an azimuth cross-correlation phase diagram for three channels based on Fig. 2;

Fig. 4 is a diagram showing the effect of the channel error compensation according to the present disclosure; and

Fig. 5 is a diagram showing a structure of an apparatus for estimating a channel error according to the present disclosure.

## DETAILED DESCRIPTION

The basic idea of the present disclosure is as follows: performing range Fast Fourier Transformation (FFT) on data of respective channels to determine a cross-correlation function and a range frequency of the transformed data of respective channels along azimuth; determining a phase of the cross-correlation function and performing differentiation on the range frequency; and determining a linear change rate of the phase of the cross-correlation function with respect to the range frequency according to the phase of the cross-correlation function and the differential result of the range frequency, and taking the linear change rate as a delay error between respective channels. Performing a delay compensation between the respective channels on the correlation function according to the delay error so as to estimate phase errors between the respective channels.

The present disclosure is explained below in detail with reference to the embodiments and accompanying drawings below to more clearly show the objective, technical scheme and advantages of the present disclosure.

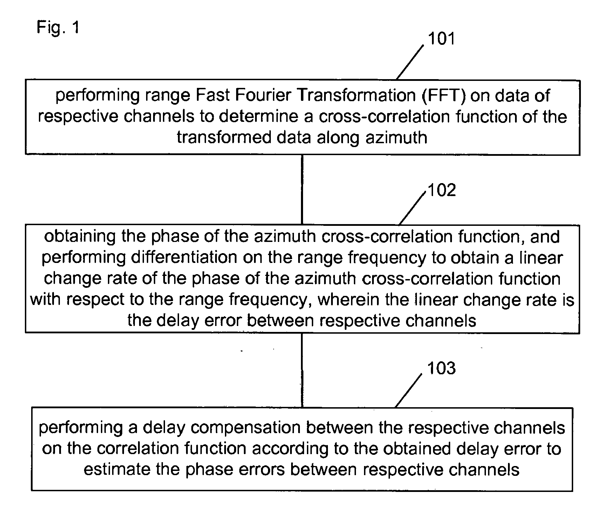

Fig. 1 is a flowchart of a method for estimating a channel error in one embodiment of the present disclosure. As shown in Fig. 1, the method for estimating the channel error in the embodiment includes the following steps:

Step 101: performing range Fast Fourier Transformation (FFT) on data of respective channels to determine a cross-correlation function of the transformed data along azimuth.

Specifically, performing range FFT on the obtained echo data of respective channels; corss-correlating the transformed signals of the respective channels along azimuth time to obtain an azimuth cross-correlation function. If a formula is adopted, then the formula is as below:

$$E\left\{S_1(f_\tau,t)S_2*(f_\tau,t)\right\} = r_0(\eta)\exp(j2\pi(f_d\frac{D}{2V} + f_\tau\Delta\tau + \Delta\phi))$$

where $S_1(f_\tau,t)$ and $S_2(f_\tau,t)$ represent echo data of two channels (range frequency domain and azimuth time domain), * represents conjugation, E{} represents averaging, $f_d$ represents a Doppler centre, D represents the phase centre distance of two channels, V represents a platform velocity, $f_\tau$ represents distance frequency, t represents azimuth time, $\Delta\tau$ represents delay between two channels, and $\Delta\phi$ represents the phase error between two channels.

The range FFT processing aims to transform the obtained multi-channel echo data to a range frequency domain and an azimuth time domain.

When the signals of respective channels transformed are correlated along azimuth, the method further includes:

the transformed signals of respective channels are multiplied by a conjugation of a reference signal to complete related operation; and then the correlation function after conjugation multiplication is integrated with respect to azimuth (discrete addition in the actual operation) to obtain an azimuth correlation function. If a formula is adopted, then the formula is as follows:

$$S_3(f_\tau,t) = S_1(f_\tau,t) \bullet S_2^*(f_\tau,t)$$

$$S_4(f_\tau) = \int_{-\infty}^{+\infty} S_3(f_\tau,t)dt$$

where $S_3(f_\tau,t)$ represents the correlation function after multiplying the channel signals by the conjugation of the reference signal, which is a function of the range frequency and the azimuth time, and $S_4(f_\tau)$ represents an azimuth cross-correlation function, which is only a function of the range frequency.

Step 102: obtaining the phase of the azimuth cross-correlation function, and performing differentiation on the range frequency to obtain a linear change rate of the phase of the azimuth cross-correlation function with respect to the range frequency, wherein the linear change rate is the delay error between respective channels.

Specifically, after the phase of the azimuth cross-correlation function is obtained and the differentiation operation (discrete differential operation in the actual operation) is performed on the range frequency, the delay between channels is obtained by addition and averaging. If a formula is adopted, then the formula is as follows:

$$\Delta \tau = E \left\{ \frac{d \arg(S_4(f_\tau))}{df_\tau} \right\}$$

where $\Delta\tau$ represents the delay between two channels, E{} represents averaging, arg() represents dephasing, $f_\tau$ represents the range frequency and $S_4(f_\tau)$ represents the azimuth cross-correlation function.

Step 103: performing a delay compensation between the respective channels on the correlation function according to the obtained delay error to estimate the phase errors between respective channels.

Specifically, an exponential term is constructed according to the obtained delay error and then is multiplied by a range frequency domain signal to perform the delay compensation between channels; an exponential term is constructed according to a Doppler centre frequency obtained by estimating system parameters or single channel data and is multiplied by the signals after the delay compensation, and the phase contribution of the Doppler centre is removed; and the phase of the correlation function after the operation is obtained and is averaged along the range direction to calculate the phase errors between respective channels.

Preferably, the step that the exponential term is constructed according to the delay error and then is multiplied by the range frequency domain signal is as follows:

$$S_5(f_\tau) = S_4(f_\tau) \bullet \exp(-2\pi f_\tau \Delta\tau)$$

The step that the exponential term is constructed according to the Doppler centre frequency and is multiplied by the signals after the delay compensation is as follows:

$$S_6(f_\tau) = S_5(f_\tau)\exp(-j2\pi f_d \frac{D}{2V})$$

The step that the phase of the correlation function is obtained and is averaged along the range direction is as follows:

$$\Delta\varphi = E\{\arg(S_6(f_\tau))\}$$

where $S_5(f_\tau)$ represents the correlation function after the delay error has been compensated, $f_\tau$ represents range frequency, $\Delta\tau$ represents the delay between two channels, $S_6(f_\tau)$ represents the correlation function after the Doppler centre compensation, D represents the distance between two channel phase centres, V represents a platform speed and $\Delta\varphi$ represents the phase error between two channels.

The present disclosure will be further described below in detail with reference to specific examples.

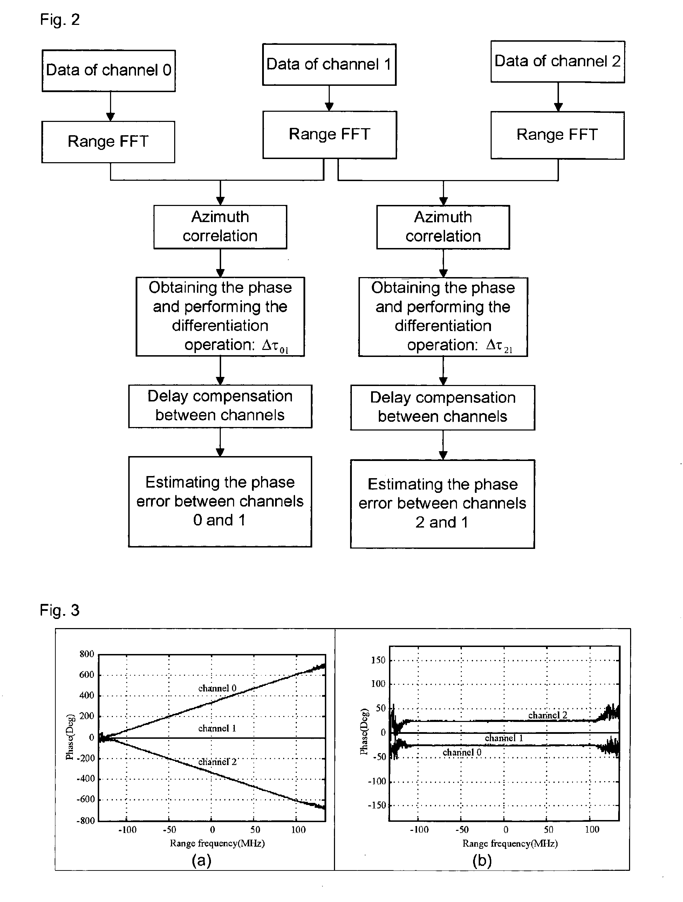

Fig. 2 is a flowchart of a method for estimating a channel error according to one embodiment of the present disclosure. With reference to Fig. 2, the process for estimating the channel error is described below in detail.

Firstly, performing range FFT on the obtained echo data of respective channels (channel 0 to channel 2) respectively. In this embodiment, it is assumed that the receiving system has three channels, and the range FFT is performed on the data of respective channels to obtain range frequency domain signals.

Secondly, determining the cross-correlation function of the transformed signals and the reference signal along azimuth. In this embodiment, the signal of channel 1 is selected as the reference signal, and the signals of channels 0, 1 and 2 are correlated with the reference signal along azimuth to obtain two azimuth cross-correlation functions; and Fig. 3(a) is a cross-correlation phase diagram with channel 1 as the reference signal, showing the phase diagram of three channels cross-correlated.

Then, extracting the phase of the azimuth cross-correlation function and performing differentiation operation (actually discrete differential operation) on the range frequency, then addition and averaging are performed to obtain the delay between channels. In this embodiment, the obtained delay between channels are $\Delta\tau_{01}$ and $\Delta\tau_{21}$.

Next, the delay compensation between channels is performed on the azimuth cross-correlation functions respectively. In this embodiment, the delay compensation terms are $\exp(-j2\pi f_\tau \Delta\tau_{01})$ and $\exp(-j2\pi f_\tau \Delta\tau_{21})$ respectively; and Fig. 3 (b) is a diagram showing a channel phase error after delay compensation, as shown in Fig. 3(b), it shows the channel phase error after the delay compensation.

Finally, the phase errors between respective channels are estimated to complete the estimation for the channel error, and then error compensation is performed according to the phase errors. The method provided by the present disclosure can be applied to SAR multi-beam imaging, interference imaging, moving target detection and the like.

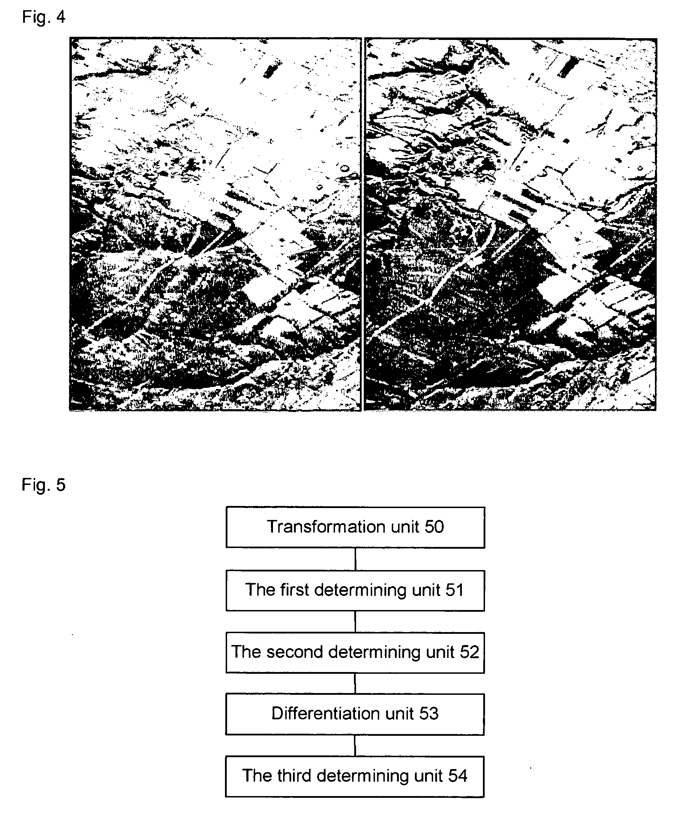

Fig. 4 is a diagram showing the effect of channel error compensation according to the present disclosure. As shown in Fig. 4, the left is a diagram showing the result not subjected to channel error compensation and the right is a diagram showing the result subjected to the error compensation according to the present disclosure. As can be seen from Fig. 4, the imaging quality is improved obviously by channel error estimation and compensation of the present disclosure.

Through the method provided by the present disclosure, channel error can be estimated precisely and stably.

Fig. 5 is a diagram showing the structure of an apparatus for estimating a channel error in one embodiment of the present disclosure. As shown in Fig. 5, the apparatus for estimating the channel error according to the present disclosure includes a transformation unit 50, a first determining unit 51, a second determining unit 52, a differentiation unit 53 and a third determining unit 54, wherein

the transformation unit 50 is configured to perform range FFT on data of respective channels;

the first determining unit 51 is configured to determine a cross-correlation function and a range frequency of the transformed data of respective channels along azimuth;

the second determining unit 52 is configured to determine a phase of the cross-correlation function;

the differentiation unit 53 is configured to perform differentiation on the range frequency; and

the third determining unit 54 is configured to determine a linear change rate of the phase of the cross-correlation function with respect to the range frequency according to the phase of the cross-correlation function and the differential result of the range frequency, and take the linear change rate as a delay error between respective channels.

Based on the apparatus for estimating the channel error shown in Fig. 5, the apparatus for estimating the channel error further includes a compensation unit (not shown in Fig. 5) and an estimation unit (not shown in Fig. 5) in the embodiment, wherein

the compensation unit is configured to perform a delay compensation between the respective channels on the correlation function according to the delay error; and

the estimation unit is configured to estimate the phase errors between the respective channels.

The first determining unit 50 is further configured to obtain echo data of the respective channels, and perform range FFT on the echo data to transform the obtained echo data to a range frequency domain and an azimuth time domain; and

cross-correlate the transformed signals of the respective channels along azimuth time to obtain an azimuth cross-correlation function; and determine the range frequency through the transformed signals of the respective channels in the range frequency domain.

The process of cross-correlating the transformed signals of the respective channels along azimuth time to obtain the azimuth cross-correlation function includes:

multiplying the transformed signals of the respective channels transformed by a conjugation of a reference signal; and

integrating the correlation function after the conjugation multiplication along azimuth to obtain an azimuth cross-correlation function.

The process of multiplying the transformed signals of the respective channels by the conjugation of the reference signal is as follows: $S_3(f_\tau, t) = S_1(f_\tau, t) \bullet S_2^*(f_\tau, t)$ ;

and

the process of integrating correlation function after the conjugation multiplication along azimuth is as follows:

$$S_4(f_\tau) = \int_{-\infty}^{+\infty} S_3(f_\tau, t)\, dt$$
,

where $S_1(f_\tau,t)$ represents the channel signal, $S_2^*(f_\tau,t)$ represents the conjugation of the reference signal $S_2(f_\tau,t)$, $S_3(f_\tau, t)$ represents the correlation function after multiplying signals of the respective channels by the conjugation of the reference signal, and $S_4(f_\tau,t)$ represents the cross-correlation function.

The third determining unit 54 is further configured to obtain the phase of the cross-correlation function, perform differentiation on the range frequency, add the phase of the cross-correlation function to the differential result and then perform averaging to obtain the linear change rate.

The process of adding the phase of the cross-correlation function to the differential result and then performing averaging is as follows:

$$\Delta\tau = E\left\{\frac{d\,\arg(S_4(f_\tau))}{df_\tau}\right\};$$

where $\Delta\tau$ represents the channel change rate between channels, E{} represents averaging, arg() represents dephasing, $f_\tau$ represents the range frequency and $S_4(f_\tau)$ represents the cross-correlation function.

The compensation unit is further configured to construct an exponential term according to the delay error and multiply the exponential term constructed according to the delay error by a range frequency domain signal to perform the delay compensation between the respective channels; and

construct an exponential term according to a Doppler centre frequency obtained by estimating system parameters or single channel data, multiply the exponential term constructed according to the Doppler centre frequency by a signal after delay compensation, and remove the phase contribution of the Doppler centre in the multiplication result; and

the estimation unit is further configured to obtain the phase of the correlation function after the operation and perform averaging along the range direction to calculate the phase errors between respective channels.

The process of multiplying the exponential term constructed according to the delay error by the range frequency domain signal is as follows:

$$S_5(f_\tau) = S_4(f_\tau) \bullet \exp(-2\pi f_\tau \Delta\tau);$$

The process of multiplying the exponential term constructed according to the Doppler centre frequency by the range frequency domain signal is as follows:

$$S_6(f_\tau) = S_5(f_\tau)\exp(-j2\pi f_d \frac{D}{2V});$$

and

the process of calculating the phase error between the channels is as follows:

$$\Delta\varphi = E\{\arg(S_6(f_\tau))\};$$

where $S_5(f_\tau)$ represents the correlation function after the delay error has been compensated, $f_\tau$ represents range frequency, $\Delta\tau$ represents the delay between channels, $S_6(f_\tau)$ represents the correlation function after the Doppler centre compensation, D represents the distance between two channel phase centres, V represents a platform speed and $\Delta\varphi$ represents the phase error between respective channels.

Those skilled in the art should appreciate that the functions realized by each processing unit in the apparatus for estimating the channel error in Fig. 5 can be understood with reference to the related description in the method for estimating the channel error above. Those skilled in the art should appreciate that the function of each processing unit of the apparatus for estimating the channel error in Fig. 5 can be realized either by a program running on a processor or by a specific logic circuit.

The above are only the preferred embodiments of the present disclosure, and not intended to limit the scope of protection of the present disclosure. The present invention is limited by the scope of appended claims 1-10.

**Claims**

1.   A method for estimating channel delay and phase error between respective channels, comprising:

    performing range Fast Fourier Transformation, FFT, on data of the respective channels to determine a cross-correlation function and a range frequency of the transformed data of the respective channels along azimuth;
    determining a phase of the cross-correlation function and performing differentiation of the phase of the cross-correlation function with respect to the range frequency;
    determining a linear change rate of the phase of the cross-correlation function with respect to the range frequency by adding the determined phase of the cross-correlation function to the result of the step of performing differentiation and then performing averaging, and taking the linear change rate as a delay error between the respective channels; and
    performing a delay compensation between the respective channels on the cross-correlation function according to the delay error, and estimating a phase error between the respective channels.

2.   The method according to claim 1, wherein the step of determining a cross-correlation function and a range frequency of the transformed data of respective channels along azimuth comprises:

    obtaining echo data of the respective channels, and performing range FFT on the echo data to transform the obtained echo data to a range frequency domain and an azimuth time domain; and
    cross-correlating the transformed signals of the respective channels along azimuth time to obtain an azimuth cross-correlation function; and determining the range frequency through the transformed signals of the respective channels in the range frequency domain.

3.   The method according to claim 2, wherein the step of cross-correlating the transformed signals of the respective channels along azimuth time to obtain the azimuth cross-correlation function comprises:

    multiplying the transformed signals of the respective channels by a conjugation of a reference signal; and
    integrating the cross-correlation function after the conjugation multiplication along azimuth to obtain an azimuth cross-correlation function.

4.   The method according to claim 3, wherein
    the step of multiplying the transformed signals of the respective channels by a conjugation of a reference signal is as follows:

$$S_3(f_\tau, t) = S_1(f_\tau, t) \bullet S_2^*(f_\tau, t) \; ;$$

    and
    the step of integrating the cross-correlation function after the conjugation multiplication along azimuth is as follows:

$$S_4(f_\tau) = \int_{-\infty}^{+\infty} S_3(f_\tau, t) dt \; ,$$

    where $f_\tau$ is the range frequency, $S_1(f_\tau, t)$ represents the respective channel signal, $S_2^*(f_\tau, t)$ represents the conjugation of the reference signal $S_2(f_\tau, t)$, $S_3(f_\tau, t)$ represents the cross-correlation function after multiplying signals of the respective channels by the conjugation of the reference signal, and $S_4(f_\tau)$ represents the cross-correlation function.

5.   The method according to claim 1, wherein the step of adding the phase of the cross-correlation function to the result of the step of performing differentiation and then performing averaging is as follows:

$$\Delta\tau = E\left\{\frac{d\arg(S_4(f_\tau))}{df_\tau}\right\};$$

where $\Delta\tau$ represents the channel change rate between the respective channels, E{} represents averaging, arg() represents dephasing, $f_\tau$ represents the range frequency and $S_4(f_\tau)$ represents the cross-correlation function.

6. The method according to claim 1, wherein the step of performing the delay compensation between the respective channels on the cross-correlation function according to the delay error and estimating the phase errors between the respective channels comprises:

constructing an exponential term according to the delay error and multiplying the exponential term constructed according to the delay error by a range frequency domain signal to perform the delay compensation between respective channels;
constructing an exponential term according to a Doppler centre frequency obtained by estimating system parameters or single channel data, multiplying the exponential term constructed according to the Doppler centre frequency by a signal after the delay compensation, and removing the phase contribution of the Doppler centre in the multiplication result; and
obtaining the phase of the cross-correlation function after the operation and performing averaging along the range direction to calculate the phase errors between respective channels.

7. The method according to claim 6, wherein the step of multiplying the exponential term constructed according to the delay error by the range frequency domain signal is as follows: $S_5(f_\tau) = S_4(f_\tau) \cdot \exp(-2\pi f_\tau \Delta\tau)$ ;
the step of multiplying the exponential term constructed according to the Doppler centre frequency by the signal after the delay compensation is as follows:

$$S_6(f_\tau) = S_5(f_\tau)\exp(-j2\pi f_d \frac{D}{2V});$$

the step of calculating the phase error between the respective channels is as follows:

$$\Delta\varphi = E\{\arg(S_6(f_\tau))\};$$

where, $S_5(f_\tau)$ represents the cross-correlation function after the delay error has been compensated, $f_\tau$ represents the range frequency, $\Delta\tau$ represents the delay between channels, $S_6(f_\tau)$ represents the cross-correlation function after the Doppler centre compensation, D represents the distance between two channel phase centres, V represents a platform speed and $\Delta\varphi$ represents the phase error between channels.

8. An apparatus for estimating channel delay and phase error between respective channels comprising: a transformation unit, a first determining unit, a second determining unit, a differentiation unit, a third determining unit, a compensation unit and an estimation unit, wherein
the transformation unit is configured to perform range Fast Fourier Transformation, FFT, on data of the respective channels;
the first determining unit is configured to determine a cross-correlation function and a range frequency of the transformed data of the respective channels along azimuth;
the second determining unit is configured to determine a phase of the cross-correlation function;
the differentiation unit is configured to perform differentiation of the phase of the cross-correlation function with respect to the range frequency;
the third determining unit is configured to determine a linear change rate of the phase of the cross-correlation function with respect to the range frequency by adding the determined phase of the cross-correlation function to the result of performing differentiation and then performing averaging, and take the linear change rate as a delay error between the respective channels;

the compensation unit is configured to perform a delay compensation between the respective channels on the cross-correlation function according to the delay error; and
the estimation unit is configured to estimate the phase errors between the respective channels.

9. The apparatus according to claim 8, wherein the first determining unit is further configured to obtain echo data of the respective channels, and perform range FFT on the echo data to transform the obtained echo data to a range frequency domain and an azimuth time domain; and
cross-correlate the transformed signals of the respective channels along azimuth time to obtain an azimuth cross-correlation function; and determine the range frequency through the transformed signals of the respective channels in the range frequency domain.

10. The apparatus according to claim 8, wherein the compensation unit is further configured to construct an exponential term according to the delay error and multiply the exponential term constructed according to the delay error by a range frequency domain signal to perform the delay compensation between the respective channels; and
construct an exponential term according to a Doppler centre frequency obtained by estimating system parameters or single channel data, multiply the exponential term constructed according to the Doppler centre frequency by a signal after the delay compensation and remove the phase contribution of the Doppler centre in the result of multiplying the exponential term constructed according to the Doppler centre frequency by a signal after the delay compensation; and
the estimation unit is further configured to obtain the phase of the cross-correlation function after the operation and perform averaging along the range direction to calculate the phase errors between the respective channels.

**Patentansprüche**

1. Verfahren zum Schätzen des Verzögerungs- und Phasenfehlers eines Übertragungskanals zwischen verschiedenen Kanälen, umfassend:

das Ausführen einer schnellen Range-Fourier-Transformation, FFT, an den Daten der jeweiligen Kanäle zum Bestimmen einer Kreuzkorrelationsfunktion und einer Range-Frequenz der transformierten Daten der jeweiligen Kanäle entlang des Azimuts;
Ermitteln einer Phase der Kreuzkorrelationsfunktion und Ausführen einer Differenzierung der Phase der Kreuzkorrelationsfunktion im Hinblick auf die Range-Frequenz;
Ermitteln einer linearen Phasenänderungsgeschwindigkeit der Kreuzkorrelationsfunktion im Hinblick auf die Range-Frequenz durch Addieren der ermittelten Phase der Kreuzkorrelationsfunktion zu dem Ergebnis des Ausführens des Differenzierungsschrittes und anschließende Mittelwertbildung und Annehmen der linearen Änderungsgeschwindigkeit als Verzögerungsfehler zwischen den jeweiligen Kanälen; und
Ausführen einer Verzögerungskompensation zwischen den jeweiligen Kanälen auf der Kreuzkorrelationsfunktion entsprechend dem Verzögerungsfehler und Schätzen eines Phasenfehlers zwischen den jeweiligen Kanälen.

2. Verfahren nach Anspruch 1, wobei der Schritt des Ermittelns einer Kreuzkorrelationsfunktion und einer Range-Frequenz der transformierten Daten der jeweiligen Kanäle entlang des Azimuts umfasst:

Erhalten von Echodaten der jeweiligen Kanäle und Ausführen einer Range-FFT an den Echodaten, um die erhaltenen Echodaten in einen Range-Frequenzbereich und einen Azimut-Zeitbereich zu transformieren, und Kreuzkorrelieren der transformierten Signale der jeweiligen Kanäle entlang der Azimut-Zeit, um eine Azimut-Kreuzkorrelationsfunktion zu erhalten, und Ermitteln der Range-Frequenz durch die transformierten Signale der jeweiligen Kanäle im Range-Frequenzbereich.

3. Verfahren nach Anspruch 2, wobei der Schritt des Kreuzkorrelierens der transformierten Signale der jeweiligen Kanäle entlang der Azimut-Zeit zum Erhalten der Azimut-Kreuzkorrelationsfunktion Folgendes umfasst:

Multiplizieren der transformierten Signale der jeweiligen Kanäle durch Konjugation eines Referenzsignals, und Integrieren der Kreuzkorrelationsfunktion nach der Konjugationsmultiplikation entlang des Azimuts, um eine Azimut-Kreuzkorrelationsfunktion zu erhalten.

4. Verfahren nach Anspruch 3, wobei

sich der Schritt des Multiplizierens der transformierten Signale der jeweiligen Kanäle durch Konjugation eines Referenzsignals wie folgt darstellt:

$$S_3(f_\tau, t) = S_1(f_\tau, t) \bullet S_2^*(f_\tau, t) ;$$

und

sich der Schritt des Integrierens der Kreuzkorrelationsfunktion nach der Konjugationsmultiplikation entlang des Azimuts wie folgt darstellt:

$$S_4(f_\tau) = \int_{-\infty}^{+\infty} S_3(f_\tau, t)\, dt ,$$

wobei $f_\tau$ die Range-Frequenz ist, $S_1(f_\tau, t)$ das jeweilige Kanalsignal darstellt, $S_2^*(f_\tau, t)$ die Konjugation des Referenzsignals angibt, $S_2(f_\tau, t)$, $S_3(f_\tau, t)$ die Kreuzkorrelationsfunktion nach dem Multiplizieren der Signale der jeweiligen Kanäle durch Konjugation des Referenzsignals darstellt und $S_4(f_\tau)$ die Kreuzkorrelationsfunktion darstellt.

5. Verfahren nach Anspruch 1, wobei sich der Schritt des Addierens der Phase der Kreuzkorrelationsfunktion zum Ergebnis des Schrittes der Ausführung der Differenzierung und des anschließenden Ausführens der Mittelwertbildung wie folgt darstellt:

$$\Delta\tau = E\left\{\frac{d\,\arg(S_4(f_\tau))}{df_\tau}\right\} ;$$

wobei $\Delta\tau$ die Kanaländerungsgeschwindigkeit zwischen den jeweiligen Kanälen darstellt, E{} die Mittelwertbildung darstellt, arg() die Phasenverschiebung angibt, $f_\tau$ die Range-Frequenz angibt und $S_4(f_\tau)$ die Kreuzkorrelationsfunktion darstellt.

6. Verfahren nach Anspruch 1, wobei der Schritt des Ausführens der Verzögerungskompensation zwischen den jeweiligen Kanälen an der Kreuzkorrelationsfunktion entsprechend dem Verzögerungsfehler und der Schätzung der Phasenfehler zwischen den jeweiligen Kanälen Folgendes umfasst:

Erstellen eines exponentiellen Ausdrucks entsprechend dem Verzögerungsfehler und Multiplizieren des entsprechend dem Verzögerungsfehler erstellten exponentiellen Ausdrucks mit einem Range-Frequenzbereichssignal, um die Verzögerungskompensation zwischen den jeweiligen Kanälen durchzuführen;
Erstellen eines exponentiellen Ausdrucks entsprechend einer Doppler-Mittelfrequenz, die durch Schätzen von Systemparametern oder einzelnen Kanaldaten ermittelt wurde, Multiplizieren des entsprechend der Doppler-Mittelfrequenz erstellten exponentiellen Ausdrucks mit einem Signal nach der Verzögerungskompensation und Entfernen des Phasenbeitrags der Doppler-Mittelfrequenz im Multiplikationsergebnis; und
Erhalten der Phase der Kreuzkorrelationsfunktion nach dieser Operation und Ausführen der Mittelwertbildung entlang der Range-Richtung, um die Phasenfehler zwischen den jeweiligen Kanälen zu berechnen.

7. Verfahren nach Anspruch 6, wobei sich der Schritt des Multiplizierens des entsprechend dem Verzögerungsfehler erstellten exponentiellen Ausdrucks mit dem Range-Frequenzbereichssignal wie folgt darstellt:

$$S_5(f_\tau) = S_4(f_\tau) \bullet \exp(-2\pi f_\tau \Delta\tau) ;$$

sich der Schritt des Multiplizierens des entsprechend der Doppler-Mittelfrequenz erstellten exponentiellen Ausdrucks mit dem Signal nach der Verzögerungskompensation wie folgt gestaltet:

$$S_6(f_\tau) = S_5(f_\tau)\exp(-j2\pi f_d \frac{D}{2V})\ ;$$

sich der Schritt des Berechnens des Phasenfehlers zwischen den jeweiligen Kanälen wie folgt darstellt:

$$\Delta\varphi = E\{\arg(S_6(f_\tau))\}\ ;$$

wobei, $S_5(f_\tau)$ die Kreuzkorrelationsfunktion zeigt, nachdem der Verzögerungsfehler kompensiert wurde, $f_\tau$ die Range-Frequenz ist, $\Delta\tau$ die Verzögerung zwischen den Kanälen abbildet, $S_6(f_\tau)$ die Kreuzkorrelationsfunktion nach der Doppler-Mittelfrequenzkompensation darstellt, D den Abstand zwischen zwei Phasenmitten angibt, V eine Plattformgeschwindigkeit und $\Delta\varphi$ den Phasenfehler zwischen den Kanälen zeigt.

8. Vorrichtung zum Schätzen des Verzögerungs- und Phasenfehlers zwischen verschiedenen Kanälen, umfassend: eine Transformationseinheit, eine erste Bestimmungseinheit, eine zweite Bestimmungseinheit, eine Differenzierungseinheit, eine dritte Bestimmungseinheit, eine Kompensationseinheit und eine Schätzeinheit, wobei
die Transformationseinheit so konfiguriert ist, dass sie an den Daten der jeweiligen Kanäle eine schnelle Range-Fourier-Transformation, FFT, ausführt,
die erste Bestimmungseinheit so konfiguriert ist, dass eine Kreuzkorrelationsfunktion und eine Range-Frequenz der transformierten Daten der jeweiligen Kanäle entlang des Azimuts bestimmt werden;
die zweite Bestimmungseinheit so konfiguriert ist, dass eine Phase der Kreuzkorrelationsfunktion bestimmt wird;
die Differenzierungseinheit so konfiguriert ist, dass eine Differenzierung der Phase der Kreuzkorrelationsfunktion im Hinblick auf die Range-Frequenz durchgeführt wird;
die dritte Bestimmungseinheit so konfiguriert ist, dass sie eine lineare Phasenänderungsgeschwindigkeit der Kreuzkorrelationsfunktion im Hinblick auf die Range-Frequenz durch Addieren der ermittelten Phase der Kreuzkorrelationsfunktion zum Ergebnis des Differenzierens und der anschließenden Mittelwertbildung bestimmt und die lineare Änderungsgeschwindigkeit als Verzögerungsfehler zwischen den jeweiligen Kanälen annimmt;
die Kompensationseinheit so konfiguriert ist, dass sie eine Verzögerungskompensation zwischen den jeweiligen Kanälen auf der Kreuzkorrelationsfunktion entsprechend dem Verzögerungsfehler ausführt; und
die Schätzeinheit so konfiguriert ist, dass sie die Phasenfehler zwischen den jeweiligen Kanälen schätzt.

9. Vorrichtung nach Anspruch 8, wobei die erste Bestimmungseinheit weiterhin so konfiguriert ist, dass sie Echodaten der jeweilige Kanäle erhält und eine Range-FFT an den Echodaten durchführt, um die erhaltenen Echodaten in einen Range-Frequenzbereich und einen Azimut-Zeitbereich zu transformieren, und
die transformierten Signale der jeweiligen Kanäle entlang der Azimut-Zeit kreuzkorreliert, um eine Azimut-Kreuzkorrelationsfunktion zu erhalten und um die Range-Frequenz durch die transformierten Signale der jeweiligen Kanäle im Range-Frequenzbereich zu ermitteln.

10. Vorrichtung nach Anspruch 8, wobei die Kompensationseinheit weiterhin so konfiguriert ist, dass sie einen exponentiellen Ausdruck entsprechend dem Verzögerungsfehler erstellt und den entsprechend dem Verzögerungsfehler erstellten exponentiellen Ausdruck mit einem Range-Frequenzbereichssignal multipliziert, um die Verzögerungskompensation zwischen den jeweiligen Kanälen durchzuführen;
einen exponentiellen Ausdruck entsprechend der Doppler-Mittelfrequenz erstellt, die durch Schätzen von Systemparametern oder einzelnen Kanaldaten ermittelt wurde, den entsprechend der Doppler-Mittelfrequenz erstellten exponentiellen Ausdruck mit einem Signal nach der Verzögerungskompensation multipliziert und den Phasenbeitrag der Doppler-Mittelfrequenz im Ergebnis des Multiplizierens des exponentiellen Ausdrucks entsprechend der Doppler-Mittelfrequenz mit einem Signal nach der Verzögerungskompensation entfernt; und
die Schätzeinheit weiterhin so konfiguriert ist, dass sie nach dieser Operation die Phase der Kreuzkorrelationsfunktion erhält und den Mittelwert entlang der Range-Richtung bildet, um Phasenfehler zwischen den jeweiligen Kanälen zu berechnen.

**Revendications**

1. Procédé d'estimation d'erreur de retardement et de phase de canal entre des canaux respectifs, comprenant :

   l'exécution d'une Transformée de Fourier rapide FFT de distance sur des données des canaux respectifs pour déterminer une fonction d'intercorrélation et une fréquence de distance des données transformées des canaux respectifs le long de l'azimut ;
   la détermination d'une phase de la fonction d'intercorrélation et l'exécution de la différenciation de la phase de la fonction d'intercorrélation par rapport à la fréquence de distance ;
   la détermination d'un taux de variation linéaire de la phase de la fonction d'intercorrélation par rapport à la fréquence de distance par l'addition de la phase déterminée de la fonction d'intercorrélation au résultat de l'étape d'exécution de la différenciation, et puis par la réalisation du calcul de la moyenne, et la prise du taux de variation linéaire en tant qu'erreur de retardement entre les canaux respectifs ; et
   l'exécution d'une compensation de retardement entre les canaux respectifs sur la fonction d'intercorrélation en fonction de l'erreur de retardement, et l'estimation d'une erreur de phase entre les canaux respectifs.

2. Procédé selon la revendication 1, dans lequel l'étape de détermination d'une fonction d'intercorrélation et d'une fréquence de distance des données transformées de canaux respectifs le long de l'azimut comprend :

   l'obtention de données d'écho des canaux respectifs, et l'exécution d'une FTT de distance sur les données d'écho pour transformer les données d'écho obtenues en un domaine de fréquence de distance et un domaine de temps d'azimut ; et
   l'intercorrélation des signaux transformés des canaux respectifs le long du temps d'azimut pour obtenir une fonction d'intercorrélation d'azimut ; et la détermination de la fréquence de distance par le biais des signaux transformés des canaux respectifs dans le domaine de fréquence de distance.

3. Procédé selon la revendication 2, dans lequel l'étape d'intercorrélation des signaux transformés des canaux respectifs le long du temps d'azimut pour obtenir la fonction d'intercorrélation d'azimut comprend :

   la multiplication des signaux transformés des canaux respectifs par une conjugaison d'un signal de référence ; et
   l'intégration de la fonction d'intercorrélation après la multiplication de conjugaison le long de l'azimut pour obtenir une fonction d'intercorrélation d'azimut.

4. Procédé selon la revendication 3, dans lequel
   l'étape de multiplication des signaux transformés des canaux respectifs par une conjugaison d'un signal de référence est la suivante :

$$S_3(f_\tau, t) = S_1(f_\tau, t) \bullet S_2^*(f_\tau, t) \; ;$$

   et
   l'étape d'intégration de la fonction d'intercorrélation après la multiplication de conjugaison le long de l'azimut est la suivante :

   suivante : $S_4(f_\tau) = \int_{-\infty}^{+\infty} S_3(f_\tau, t)\,dt$ , où $f_\tau$ est la fréquence de distance,

   où $S_1(f_\tau, t)$ représente le signal de canaux respectifs, $S_2^*(f_\tau, t)$ représente la conjugaison du signal de référence, $S_2(f_\tau, t)$, $S_3(f_\tau, t)$ représente la fonction d'intercorrélation après la multiplication des signaux des canaux respectifs par la conjugaison du signal de référence, et $S_4(f_\tau)$ représente la fonction d'intercorrélation.

5. Procédé selon la revendication 1, dans lequel l'étape d'addition de la phase de la fonction d'intercorrélation au résultat de l'étape d'exécution de la différenciation et puis de la réalisation du calcul de la moyenne est la suivante :

$$\Delta\tau = E\left\{\frac{d\,\arg(S_4(f_\tau))}{df_\tau}\right\};$$

où $\Delta_\tau$ représente le taux de variation de canaux entre les canaux respectifs, E{} représente le calcul de la moyenne, arg() représente le déphasage, $f_\tau$ représente la fréquence de distance et $S_4(f_\tau)$ représente la fonction d'intercorrélation.

6. Procédé selon la revendication 1, dans lequel l'étape d'exécution de la compensation de retardement entre les canaux respectifs sur la fonction d'intercorrélation en fonction de l'erreur de retardement et de l'estimation des erreurs de phase entre les canaux respectifs comprend :

la construction d'un terme exponentiel en fonction de l'erreur de retardement et la multiplication du terme exponentiel construit en fonction de l'erreur de retardement par un signal de domaine de fréquence de distance pour exécuter la compensation de retardement entre des canaux respectifs ;
la construction d'un terme exponentiel en fonction d'une fréquence centrale Doppler obtenue en estimant des paramètres de système ou des données de canaux uniques, la multiplication du terme exponentiel construit en fonction de la fréquence centrale Doppler par un signal après la compensation de retardement, et la suppression de la contribution de phase du centre Doppler dans le résultat de la multiplication ; et
l'obtention de la phase de la fonction d'intercorrélation après l'opération et la réalisation du calcul de la moyenne le long de direction de distance pour calculer les erreurs de phase entre des canaux respectifs.

7. Procédé selon la revendication 6, dans lequel l'étape de multiplication du terme exponentiel construit en fonction de l'erreur de retardement par le signal de domaine de fréquence de distance est la suivante: $S_5(f_\tau) = S_4(f_\tau) \cdot \exp(-2\pi f_\tau \Delta\tau)$ ;
l'étape de multiplication du terme exponentiel construit en fonction de la fréquence centrale Doppler par le signal après la compensation de retardement est la suivante:

$$S_6(f_\tau) = S_5(f_\tau)\exp\left(-j2\pi f_d \frac{D}{2V}\right);$$

l'étape de calcul de l'erreur de phase entre les canaux respectifs est la suivante:

$$\Delta\varphi = E\{\arg(S_6(f_\tau))\};$$

où $S_5(f_\tau)$ représente la fonction d'intercorrélation après la compensation de l'erreur de retardement, $f_\tau$ représente la fréquence de distance, $\Delta\tau$ représente le retardement entre des canaux, $S_6(f_\tau)$ représente la fonction d'intercorrélation après la compensation du centre Doppler, D représente la distance entre deux centres de phase de canaux, V représente une vitesse de plateforme et $\Delta\varphi$ représente l'erreur de phase entre des canaux.

8. Appareil d'estimation d'erreur de retardement et de phase de canaux entre des canaux respectifs, comprenant : une unité de transformation, une première unité de détermination, une deuxième unité de détermination, une unité de différenciation, une troisième unité de détermination, une unité de compensation et une unité d'estimation, dans lequel
l'unité de transformation est configurée pour exécuter la Transformée de Fourier rapide FFT de distance sur des données des canaux respectifs ;
la première unité de détermination est configurée pour déterminer une fonction d'intercorrélation et une fréquence de distance des données transformées des canaux respectifs le long de l'azimut ;
la deuxième unité de détermination est configurée pour déterminer une phase de la fonction d'intercorrélation ;
l'unité de différenciation est configurée pour exécuter la différenciation de la phase de la fonction d'intercorrélation par rapport à la fréquence de distance ;

la troisième unité de détermination est configurée pour déterminer un taux de variation linéaire de la phase de la fonction d'intercorrélation par rapport à la fréquence de distance par l'addition de la phase déterminée de la fonction d'intercorrélation au résultat de l'exécution de la différenciation et puis par l'exécution du calcul de la moyenne, et pour prendre le taux de variation linéaire comme erreur de retardement entre les canaux respectifs ; l'unité de compensation est configurée pour exécuter une compensation de retardement entre les canaux respectifs sur la fonction d'intercorrélation en fonction de l'erreur de retardement ; et l'unité d'estimation est configurée pour estimer les erreurs de phase entre les canaux respectifs.

9. Appareil selon la revendication 8, dans lequel la première unité de détermination est également configurée pour obtenir des données d'écho des canaux respectifs, et exécuter une FFT de distance sur les données d'écho pour transformer les données d'écho obtenues en un domaine de fréquence de distance et un domaine de temps d'azimut ; et intercorréler les signaux transformés des canaux respectifs le long du temps d'azimut pour obtenir une fonction d'intercorrélation d'azimut ; et déterminer la fréquence de distance par le biais des signaux transformés des canaux respectifs dans le domaine de fréquence de distance.

10. Appareil selon la revendication 8, dans lequel l'unité de compensation est également configurée pour construire un terme exponentiel en fonction de l'erreur de retardement et multiplier le terme exponentiel construit en fonction de l'erreur de retardement par un signal de domaine de fréquence de distance pour exécuter la compensation de retardement entre les canaux respectifs ; et construire un terme exponentiel en fonction d'un fréquence centrale Doppler obtenue par l'estimation de paramètres de système ou de données de canaux uniques, multiplier le terme exponentiel construit en fonction de la fréquence centrale Doppler par un signal après la compensation de retardement, et supprimer la contribution de phase du centre Doppler dans le résultat de la multiplication du terme exponentiel construit en fonction de la fréquence centrale Doppler par un signal après la compensation de retardement ; et l'unité d'estimation est également configurée pour obtenir la phase de la fonction d'intercorrélation après l'opération et exécuter le calcul de la moyenne le long de la direction de distance pour calculer les erreurs de phase entre les canaux respectifs.

Fig. 1

101

performing range Fast Fourier Transformation (FFT) on data of respective channels to determine a cross-correlation function of the transformed data along azimuth

102

obtaining the phase of the azimuth cross-correlation function, and performing differentiation on the range frequency to obtain a linear change rate of the phase of the azimuth cross-correlation function with respect to the range frequency, wherein the linear change rate is the delay error between respective channels

103

performing a delay compensation between the respective channels on the correlation function according to the obtained delay error to estimate the phase errors between respective channels

EP 2 648 379 B1

Fig. 2

Fig. 3

(a)

(b)

16

Fig. 4

Fig. 5

| Transformation unit 50 |
|---|
| The first determining unit 51 |
| The second determining unit 52 |
| Differentiation unit 53 |
| The third determining unit 54 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2247373 A